# EUROPEAN PATENT SPECIFICATION

(11) **EP 2 503 313 B1**
(45) Date of publication and mention of the grant of the patent: **06.01.2016**
(21) Application number: 11159846.2
(22) Date of filing: 25.03.2011
(51) Int. Cl.: G01M 1/04, G01M 1/28

(54) **Device for measuring forces generated by an unbalance**
Vorrichtung zur Messung der von einer Unwucht erzeugten Kräfte
Dispositif pour mesurer les forces générées par un déséquilibre

(43) Date of publication of application: 26.09.2012
(73) Proprietor: Snap-on Equipment Srl a unico socio, 42015 Correggio (RE) (IT)
(72) Inventor: Sotgiu, Paolo, 41125, Modena (IT)
(74) Representative: Eisenführ Speiser

(56) References cited:
- US-A- 3 924 473
- US-A- 4 193 305
- US-B1- 6 430 992

## Description

The invention concerns a device for measuring forces generated by an unbalance of a rotor, in particular of a vehicle wheel (rim/tyre assembly), comprising the features in the preamble of claim 1.

Such a device is known from US 6,430,992 B1 and has a stationary frame and a first bearing, in which a measuring shaft is mounted rotatably about its shaft axis. A second bearing is pivotally supporting the first bearing about a pivot axis which intersects the shaft axis and is supported by spring means on the stationary frame. A first force sensor measures forces generated by the unbalance of the rotating rotor and acting on the measuring shaft about the pivot axis and a second force sensor measures forces generated by the unbalance of the rotating rotor and acting on the measuring shaft and on the second bearing in a direction intersecting the shaft axis.

For establishing the pivot axis plate-like support levers are arranged along planes that intersect at a virtual support point acting like a swivel pin.

It is known from US 4,449,407 to mount the measuring shaft rotating in two bearing units arranged at an axial distance from each other and supported via force sensors opposite a hollow bearing housing. This measuring shaft mounting is borne by a stationary frame.

In a device known from EP 0 133 229 A1 used for balancing motor vehicle wheels, the measuring shaft is supported on a stationary frame in a mounting that has force transmitters. To achieve a dynamic balancing, two mounting planes in which the force transducers are also arranged are provided for the mounting of the measuring shaft.

The force sensors provided in known devices in the mounting planes at the measuring points supply sensor signals that are proportional to the centrifugal forces that result from the rotor unbalance. With the conventional standard measuring systems for wheel balancing machines, a floating mounting is typical for the measuring shaft and the rotor clamped onto it. Translation onto the two compensating planes on the rotor for the dynamic balancing of the unbalance takes place based on the force lever law of statics. The known devices disclose structures and calibration methods with the aim that the measurements of the forces in the two mounting planes by the sensors are independent from each other (plane separation).

The technical problem of the invention is to provide a device of the type mentioned in the beginning in which, due to the force dynamics, an improved plane separation is achieved.

According to the invention the problem is solved by the features of claim 1. The sub-claims include favourable modifications of the invention.

The invention provides a device for measuring forces generated by an unbalance of a rotor, especially a tyre service machine, such as for instance a wheel balancer adapted for balancing vehicle wheels and/or a tyre changing machine. The device comprises a stationary frame and a first bearing, preferably in form of a tube, in which a measuring shaft is mounted rotatably about its shaft axis.

The measuring shaft has close to or at the free end mounting means designed for attachment of the rotor, for instance a vehicle wheel.

The rotor is configured to be balanced in one (static balancing) or in two compensation planes (dynamic balancing). A second bearing having a rigid structure supports pivotally the first bearing about a pivot axis which intersects, preferably perpendicularly, the shaft axis and is supported on the stationary frame. A first force sensor measures forces generated by the rotor unbalance and acting on the measuring shaft about the pivot axis. A second force sensor measures the forces generated by the rotor unbalance and acting on the shaft and on the second bearing in a direction intersecting the shaft axis, such direction preferably being perpendicular to the pivot axis.

The pivotal displacement between the first bearing and the second bearing is enabled by spring means, especially by means of one or more torsion-springs. The displacement between the second bearing and the stationary frame is enabled by spring means which are preferably configured as plate springs. The used spring means permit a displacement needed for the currently available load cells or force transducers to measure forces, for instance in the region of µm-displacement. Such load cells or force transducers can inlcude piezo-crystals or Hall-elements as force-sensible elements.

In order to establish the pivot axis of about which the second bearing is pivotably supported, preferably two torsion springs are provided, wherein the shaft axis extends in the middle between the two torsion springs.

Preferably, the first force sensor is placed, especially tensioned between the first bearing and the second bearing and the second force sensor is placed, especially tensioned between the second bearing and the stationary frame.

The measuring directions of the first force sensor and the second force sensor extend preferably in one common plane which passes through the shaft axis.

The measuring direction of the first force sensor may be inclined with a specific angle with respect to a direction perpendicular to the shaft axis. Such inclination angle can be determined in a range from 80° to 100°, preferably from 85° to 95°. Even more preferably, such inclination angle is 90°, in which case the measuring direction of the first force sensor extends parallel to the shaft axis.

The measuring direction of the second force sensor may be inclined with a specific angle with respect to the shaft axis, wherein the measuring direction of the first force sensor is substantially parallel to the shaft axis. The inclination angle of the measuring direction of the second force sensor with respect to the shaft axis can be determined in a range from 60° to 120° , for instance from 65° to 115° , especially 70° to 110° . In a preferred embodiment, the inclination angle is either 75° or 105°.

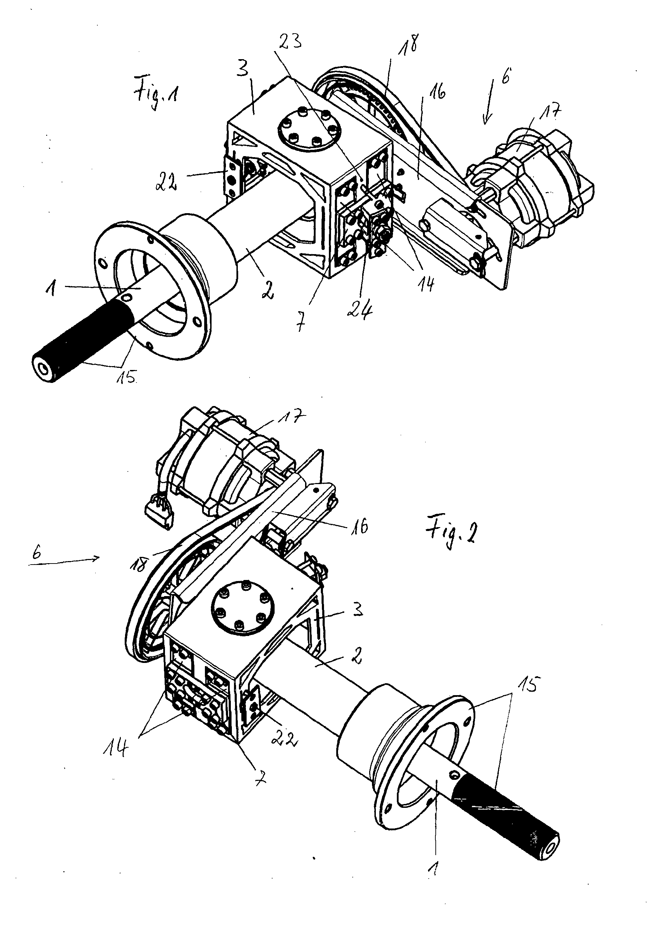

The invention will be explained in more detail in conjunction with a preferred embodiment represented in the drawings which show in
- Figure 1: a perspective view of the measuring device from one side;
- Figure 2: a perspective view of the measuring device from the other side;
- Figure 3: a side elevation view of the one side of the measuring device;
- Figure 4: a section view along the section line A-A in Figure 3;
- Figure 5: a side elevation view of the other side of the measuring device;
- Figure 6: a plan view of the measuring device;
- Figure 7: a section view along the section line B-B in Figure 6; and
- Figure 8: an explosive view showing the components of the measuring device.

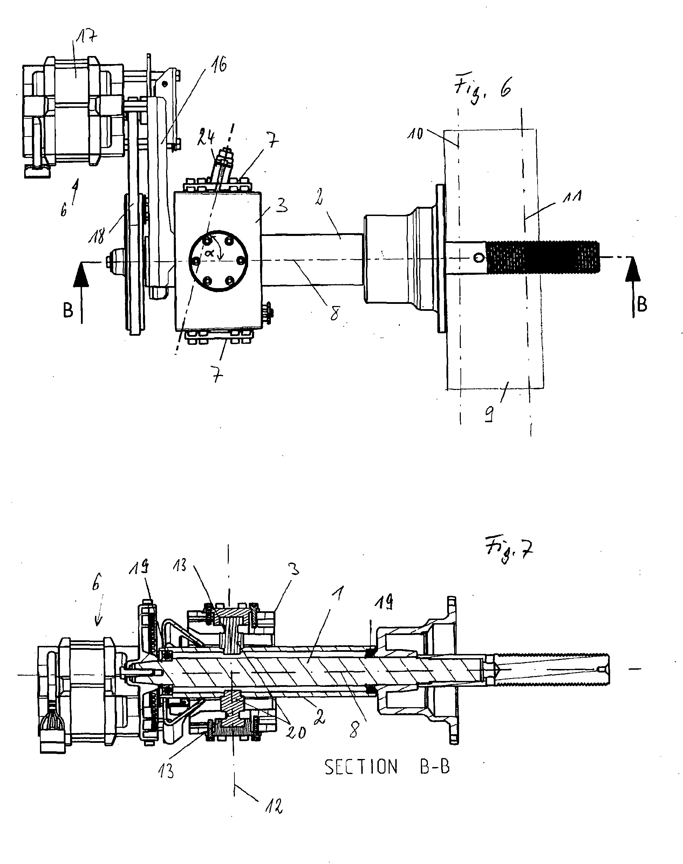

The embodiment shown in the Figures is a measuring device for measuring forces, especially centrifugal forces which are generated by an imbalance of a rotor 9 which is schematically shown in Fig. 6. The rotor 9 can have the configuration of a vehicle wheel which consists of a rim/tyre assembly. The rotor 9 is adapted to be balanced in one (static balancing) or two compensation planes 10, 11 (dynamic balancing).

The measuring device can be mounted in a stationary frame 7 which can be the housing of a wheel balancer adapted to balance vehicle wheels. The Figures show parts of the stationary frame 7 or parts which are rigidly connected to the stationary frame 7. Those parts are provided with the reference sign "7".

The measuring device comprises a first bearing 2 in form of a tube in which a measuring shaft 1 is mounted rotatably about its shaft axis 8. For this, the measuring shaft 1 is supported by means of roller bearings 19 within the tube-shaped first bearing 2. The measuring shaft 1 has in the region of its free end mounting means 15 which can be designed in known manner for attachment of the rotor 1, especially the vehicle wheel.

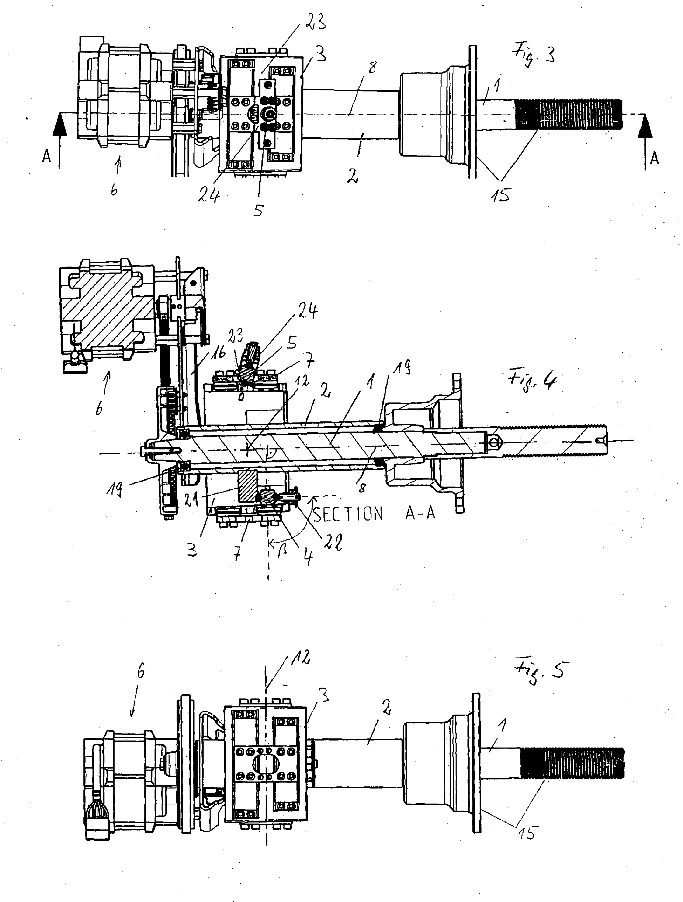

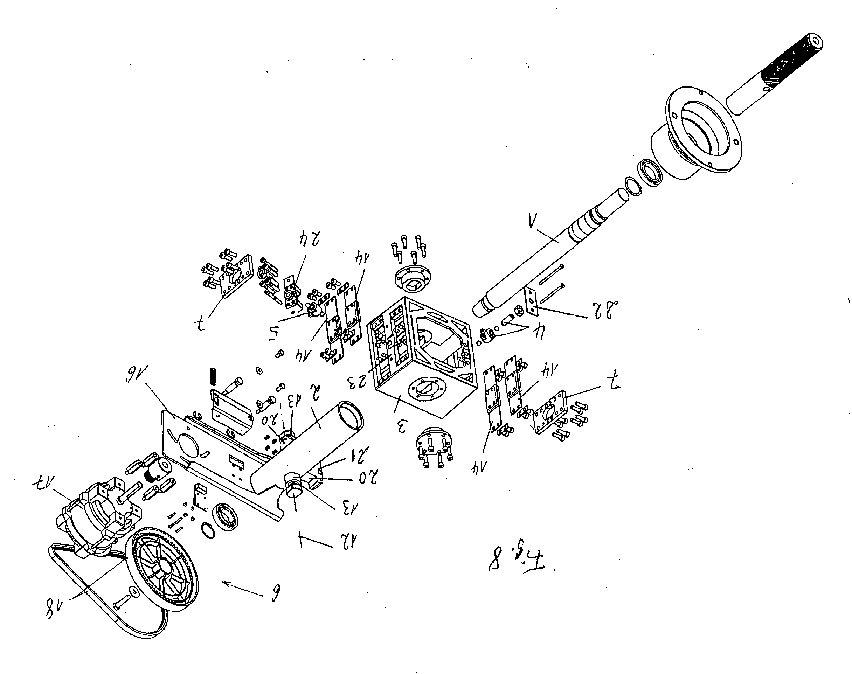

A second bearing 3 for the measuring shaft 1 has a rigid frame structure and supports pivotally the first bearing 2 about a pivot axis 12 (Figures 4, 7, 8). The pivot axis 12 is generated by spring means consisting of two torsion springs 13. The torsion springs 13 are formed on mounting bolts 20 which are rigidly connected to the first bearing 2 and to the second bearing 3. The mounting bolts 20 extend diametrically from the surface of the tubular first bearing 2. The one ends (inner ends) of the mounting bolts 20 are connected to the first bearing 2 and the other ends (outer ends) of the mounting bolts 20 are connected to the second bearing 3. The torsion springs 13 are established by reduced diameters of the mounting bolts 20 between the inner and the outer ends of the mounting bolts 20. The torsion springs 13 are arranged with respect to the measuring shaft 1 such that the shaft axis 8 extends in the middle between the torsion springs 13 and the pivot axis 12 intersects the shaft axis 8 in a perpendicular angle.

The second bearing 3 is supported on the stationary frame 7 in a manner that a force measurement between the measuring shaft 1, particularly the second bearing and the stationary frame 7 is possible. For this, the second bearing 3 of the measuring shaft 1 is supported preferably by means of spring means which have the configuration of plate springs 14. The plate springs 14 are places on both sides of the shaft 1 and extend parallel to each other and perpendicularly with respect to the shaft axis 8. The plate springs on the both sides of the shaft 1 have equal distances from the shaft axis 8. The both ends of the plate spring 14 are rigidly, for instance by means of screw connections, connected to the frame structure of the second bearing 3. The plate springs 14 are rigidly, for instance by means of screw connections, connected in the middle of the extensions to the stationary frame 7 or to respective parts of the stationary frame.

The specific arrangement of the spring means 13 and 14 enables that the measuring shaft 1 can perform displacements in two degrees of freedom, namely a rotation about the pivot axis 12 and a translatory motion with respect to the stationary frame 7. The directions of the two displacements extend in one plane which passes through the shaft axis 8.

The rotary and translatory displacements of the measuring shaft 1 are measured by force sensors having measuring directions within the one plane in which extend the displacement directions of the measuring shaft 1. A first force sensor 4 measures forces generated by unbalance of the rotating rotor 9 and acting about the pivot axis 12. A second force sensor 5 measures forces generated by the unbalance of the rotating rotor 9 and acting on the shaft 1 and on the second bearing 3 in a direction intersecting the shaft axis 8.

The first force sensor 4 is positioned and tensioned between the first bearing 2 and the second bearing 3 (Figure 4). The measuring direction of the force sensor 4 is inclined with a specific angle β with respect to a direction perpendicular to the shaft axis 8, wherein the angle β is determined in a range from 80° to 100°, preferably from 85° to 95°. In the illustrated embodiment, the angle β is determined to about 90°, namely, in the illustrated embodiment the measuring direction of the first force sensor 4 extends parallel to the shaft axis 8. The rotary displacements of the shaft 1 are transmitted by a lever 21 which is rigidly fixed to the tubular first bearing 2. The rotary displacement of the shaft 1 is transmitted via the roller bearings 19 which are positioned at the ends of the tubular first bearing 2 (Figures 4, 7) to the first bearing 2 and via the lever 21 onto the one end of the force sensor 4. For this transmitting movement the lever 21 rotates about the pivot axis 12. The lever 21 extends along the one plane in which the measuring directions of the force sensors 4, 5 lie and extends perpendicularly with respect to the shaft axis 8. The other end of the force sensor 4 is rigidly supported on the second bearing 3 by means of a support plate 22 screwed with the second baring 3.

The second force sensor 5 is at its one end in force transmitting manner connected to a middle side portion 23 of the second bearing 3. The middle side portion 23 extends parallel to the plate springs 14 on the same side of the second bearing 3. The other end of the force sensor 5 is supported on a support bracket 24 which is rigidly connected, preferably by means of screw connections with the stationary frame 7 or a respective part of the stationary frame. The measuring direction of the second force sensor 5 is inclined by a specific angle α (Figure 6) with respect to the shaft axis 8. The angle α can be determined in a range from 60° to 120°, for example from 65° to 115° , especially 70° to 110° . In the illustrated embodiment, the angle α is determined to about 75°.

A support member 16 is rigidly connected to the tubular first bearing 2. The support member 16 supports a driving motor 17, especially an electric motor, and transmission means 18, especially a belt transmission which transmits the motor torque onto the measuring shaft 1 for rotating the rotor 9 during the measurement.

The forces measured at special rotary angles with respect to the rotor 9 whose axis is coincident with the shaft axis 8 are used together with the known dimensional parameters of measuring device, especially the distances of the compensation planes 10, 11 from the pivot axis 12 to calculate balancing masses to be applied in one or in the two compensation planes 10, 11 (Figure 6) of the rotor 9.

All components of the measuring device can be mounted and connected to form a pre-mounted measuring unit which is rigidly connected on both sides of the frame structure of the second bearing 3 to the stationary frame 7, preferably be screw connections, as explained above.

### LIST OF PARTICULARS

- 1: measuring shaft
- 2: first bearing
- 3: second bearing
- 4: first force sensor
- 5: second force sensor
- 6: driving means
- 7: stationary frame
- 8: shaft axis
- 9: rotor (rim/tyre assembly)
- 10, 11: compensation planes
- 12: pivot axis
- 13: spring means (torsion spring)
- 14: spring means (plate spring)
- 15: mounting means
- 16: support member
- 17: motor (electric motor)
- 18: transmission means
- 19: roller bearings
- 20: mounting bolt
- 21: lever
- 22: support plate
- 23: middle side portion
- 24: support bracket

## Claims

1. A device adapted to measure forces generated by an unbalance of a rotor, said device comprising:
a stationary frame (7);
a first bearing (2);
a measuring shaft (1) mounted rotatably about its shaft axis (8) in the first bearing (2);
a mounting means (15) provided on the measuring shaft (1) designed for attachment of the rotor (9), wherein the rotor (9) is designed to be balanced in at least one compensating plane (10, 1);
a second bearing (3) having a rigid frame structure pivotally supporting the first bearing (2) about a pivot axis (12) which intersects the shaft axis (8) and being supported on the stationary frame (7);
a first force sensor (4) placed between the first bearing (2) and the second bearing (3) adapted to measure forces generated by the unbalance of the rotating rotor (9) and acting on the measuring shaft (1) about the pivot axis (12); and
a second force sensor (5) placed between the second bearing (3) and the stationary frame (7) adapted to measure forces generated by the unbalance of the rotating rotor (9) and acting on the measuring shaft (1) and on the second bearing (3) in a direction intersecting the shaft axis (8), wherein spring means (14) are provided between the second bearing (3) and the stationary frame (7) to permit a displacement between the second bearing (3) and the stationary frame (7) enabling the second force sensor (5) to perform the force measurement,
**characterized in that**
the first bearing (2) is supported by one or more torsion springs (13) on the second bearing (3) to generate the pivot axis (12).

2. A device according to claim 1, wherein the spring means (14) between the second bearing (3) and the stationary frame (7) has the configuration of plate springs.

3. A device according to claim 1 or 2, wherein the measuring directions of the first force sensor (4) and of the second force sensor (5) extend in one plane which passes through the shaft axis (8).

4. A device according to one of the claims 1 to 3, wherein the measuring direction of the second force sensor (5) is inclined with a specific angle (*α*) with respect to the shaft axis (8), wherein the angle (α) is determined in a range from 60° to 120° or from 65° to 115° or from 70° to 110°

5. A device according to claim 4, wherein the angle (α) is equal to about 75° or to about 105°.

6. A device according to one of the claims 1 to 5, wherein the measuring direction of the first force sensor (4) is inclined with a specific angle (β) with respect to a direction perpendicular to the shaft axis (8), wherein the angle (β) is determined in a range from 80° to 100° or from 85° to 95°.

7. A device according to claim 6, wherein the angle (β) is equal to about 90°.

8. A device according to one of the claims 1 to 7, wherein the pivot axis (12) intersects perpendicularly the shaft axis (8).

9. A device according to one of the claims 1 to 8, wherein the second force sensor (5) measures forces generated by the unbalance of the rotating rotor (9) and acting on the measuring shaft (1) and on the second bearing (3) in a direction perpendicular to the pivot axis (12).

10. A device according to one of the claims 1 to 9, wherein a support member (16) supporting a motor (17) and transmission means (18) transmitting the torque of the motor (17) to the measuring shaft (1) is rigidly connected to the first bearing (2).

11. A device according to claim 2, wherein the spring means (14) designed as plate springs extend in parallel arrangement perpendicularly to the shaft axis (8).

12. A device according to claim 11, wherein the plate springs are positioned on both sides with respect to the shaft axis (8).

13. A device according to one of the claims 2, 11, 12, wherein the plate springs (14) are rigidly connected to the stationary frame (7) in a plane which includes the shaft axis (8).

14. A device according to one of the claims 2, 11 to 13, wherein the plate springs (14) are rigidly connected in the middle of their extension to the stationary frame (7).

15. A device according to one of the claims 1 to 17, wherein the first bearing (2) has the form of a tube.

16. A device according to one of the claims 1 to 15, wherein the pivot axis (12) about which the second bearing (3) is pivotally supported is established by means of two torsion springs (13, 13), wherein the shaft axis (8) extends in the middle between the two torsion springs (13, 13).

17. Use of a device according to one of the claims 1 to 16 in a tyre service machine.

## Patentansprüche

1. Vorrichtung, welche geeignet ist, Kräfte, die infolge einer Unwucht auf einen Rotor wirken, zu messen, und welche enthält:
einen stationären Rahmen (7);
ein erstes Lager (2);
eine Messwelle (1), die drehbar um ihre Wellenachse (8) in dem ersten Lager (2) gelagert ist;
ein Montagemittel (15), das an der Messwelle (1) vorgesehen ist und das zum Anbringen des Rotors (9) gestaltet ist, wobei der Rotor (9) vorgesehen ist, in zumindest einer Ausgleichsebene (10, 11) ausgewuchtet zu werden;
ein zweites Lager (3), das eine steife Rahmenstruktur aufweist, das das erste Lager (2) schwenkbar um eine Schwenkachse (12), die die Wellenachse (8) schneidet, hält und das an dem stationären Rahmen (7) gehalten ist;
einen ersten Kraftsensor (4), der zwischen dem ersten Lager (2) und dem zweiten Lager (3) angeordnet und in der Lage ist, Kräfte, welche durch eine Unwucht des rotierenden Rotors (9) hervorgerufen werden, und welche auf die Messwelle (1) um die Schwenkachse (12) wirken, zu messen; und
einen zweiten Kraftsensor (5), der zwischen dem zweiten Lager (3) und dem stationären Rahmen (7) angeordnet und geeignet ist, Kräfte zu messen, welche durch die Unwucht des rotierenden Rotors (9) hervorgerufen werden und auf die Messwelle (1) sowie auf das zweite Lager (3) in einer Richtung, die die Wellenachse (8) schneidet, wirken, wobei Federmittel (14) zwischen dem zweiten Lager (3) und dem stationären Rahmen (7) vorgesehen sind, um eine Verschiebung zwischen dem zweiten Lager (3) und dem stationären Rahmen (7) zu ermöglichen, die dem zweiten Kraftsensor (5) erlaubt, die Kraftmessung auszuführen,
**dadurch gekennzeichnet,**
**dass** das erste Lager (2) durch eine oder mehrere Torsionsfedern (13) an dem zweiten Lager (3) gehalten ist, um die Schwenkachse (12) zu bilden.

2. Vorrichtung nach Anspruch 1,
wobei die Federmittel (14) zwischen dem zweiten Lager (3) und dem stationären Rahmen (7) die Ausgestaltung von Blattfedern aufweisen.

3. Vorrichtung nach Anspruch 1 oder 2,
wobei sich die Messrichtungen des ersten Kraftsensors (4) und des zweiten Kraftsensors (5) in einer Ebene erstrecken, welche durch die Wellenachse (8) geht.

4. Vorrichtung nach einem der Ansprüche 1 bis 3,
wobei die Messrichtung des zweiten Kraftsensors (5) mit einem spezifischen Winkel (α) gegenüber der Wellenachse (8) geneigt ist, wobei der Winkel (α) in einem Bereich von 60° bis 120° oder von 65° bis 115° oder von 70° bis 110° festgelegt ist.

5. Vorrichtung nach Anspruch 4,
wobei der Winkel (α) ungefähr gleich 75° oder ungefähr gleich 105° beträgt.

6. Vorrichtung nach einem der Ansprüche 1 bis 5,
wobei die Messrichtung des ersten Kraftsensors (4) mit einem spezifischen Winkel (β) mit Bezug auf eine Richtung, welche senkrecht zur Wellenachse (8) verläuft, geneigt ist, wobei der Winkel (β) in einem Bereich von 80° bis 100° oder von 85° bis 95° festgelegt ist.

7. Vorrichtung nach Anspruch 6,
wobei der Winkel (β) ungefähr gleich 90° ist.

8. Vorrichtung nach einem der Ansprüche 1 bis 7,
wobei die Schwenkachse (12) die Wellenachse (8) senkrecht schneidet.

9. Vorrichtung nach einem der Ansprüche 1 bis 8,
wobei der zweite Kraftsensor (5) Kräfte misst, die durch die Unwucht des rotierenden Rotors (9) hervorgerufen werden und die auf die Messwelle (1) sowie auf das zweite Lager (3) in einer Richtung senkrecht zur Schwenkachse (12) wirken.

10. Vorrichtung nach einem der Ansprüche 1 bis 9,
wobei ein Tragelement (16), welches einen Motor (17) sowie Übertragungsmittel (18) hält, welche ein Drehmoment des Motors (17) auf die Messwelle (1) übertragen, starr mit dem ersten Lager (2) verbunden ist.

11. Vorrichtung nach Anspruch 2,
wobei sich die Federmittel (14), die als Blattfedern ausgebildet sind, in paralleler Anordnung senkrecht zu der Wellenachse (8) erstrecken.

12. Vorrichtung nach Anspruch 11,
wobei die Blattfedern an beiden Seiten, bezogen auf die Wellenachse (8), angeordnet sind.

13. Vorrichtung nach einem der Ansprüche 2, 11 oder 12,
wobei die Blattfedern (14) mit dem stationären Rahmen (7) in einer Ebene, die die Wellenachse (8) enthält, starr verbunden sind.

14. Vorrichtung nach einem der Ansprüche 2 oder 11 bis 13,
wobei die Blattfedern (14) in der Mitte ihrer Ausdehnung starr mit dem stationären Rahmen (7) verbunden sind.

15. Vorrichtung nach einem der Ansprüche 1 bis 14,
wobei das erste Lager (2) die Form eines Rohres aufweist.

16. Vorrichtung nach einem der Ansprüche 1 bis 15,
wobei die Schwenkachse (12), um die das zweite Lager (3) schwenkbar gehalten ist, durch zwei Torsionsfedern (13, 13) gebildet wird, wobei sich die Wellenachse (8) in der Mitte zwischen den beiden Torsionsfedern (13, 13) erstreckt.

17. Verwendung einer Vorrichtung nach einem der Ansprüche 1 bis 16 in einer Reifenservicemaschine.

## Revendications

1. Dispositif apte à mesurer des forces produites par le balourd d'un rotor, le dispositif comprenant :
un cadre (7) fixe ;
un premier palier (2) ;
un arbre (1) de mesure monté tournant autour de son axe (8) dans le premier palier (2) ;
un moyen (15) de montage prévu sur l'arbre (1) de mesure et conçu pour l'assujettissement du rotor (9), le rotor étant conçu pour être équilibré dans au moins un plan (10, 11) de compensation ;
un deuxième palier (3) ayant une structure de cadre rigide supportant à pivotement le palier (2) autour d'un axe (12) de pivotement, qui coupe l'axe (8) de l'arbre et étant supporté sur le cadre (7) fixe ;
un premier capteur (4) de force, placé entre le premier palier (2) et le deuxième palier (3) et propre à mesurer des forces produites par le balourd du rotor (9) tournant et s'appliquant sur l'arbre (1) de mesure autour de l'axe (12) de pivotement et
un deuxième capteur (5) de force, placé entre le deuxième palier (3) et le cadre (7) fixe et propre à mesurer des forces produites par le balourd du rotor (9) tournant et s'appliquant sur l'arbre (1) de mesure et sur le deuxième palier (3) dans une direction coupant l'axe (8) de l'arbre, des moyens (14) de ressort étant prévus entre le deuxième palier (3) et le cadre (7) fixe, pour permettre un déplacement entre le deuxième palier (3) et le cadre (7) fixe, permettant au deuxième capteur (5) de force d'effectuer la mesure de force,
**caractérisé en ce que**
le premier palier est supporté par un ressort (13) de torsion ou par plusieurs ressorts (13) de torsion sur le deuxième palier (3), pour produire l'axe (12) de pivotement.

2. Dispositif suivant la revendication 1, dans lequel les moyens (14) de ressort entre le deuxième palier (3) et le cadre (7) fixe ont la configuration de ressorts à lame.

3. Dispositif suivant la revendication 1 ou 2, dans lequel les directions de mesure du premier capteur (4) de force et du deuxième capteur (5) de force s'étendent dans un plan, qui passe par l'axe (8) de l'arbre.

4. Dispositif suivant l'une des revendications 1 à 3, dans lequel la direction de mesure du deuxième capteur (5) de force est inclinée d'un angle (α) précis par rapport à l'axe (8) de l'arbre, l'angle (α) étant dans une plage allant de 60° à 120° ou de 65° à 115° ou de 70° à 110°.

5. Dispositif suivant la revendication 4, dans lequel l'angle (α) est égal à environ 75° ou à environ 105°.

6. Dispositif suivant l'une des revendications 1 à 5, dans lequel la direction de mesure du premier capteur (4) de force est inclinée d'un angle (β) précis par rapport à la direction perpendiculaire à l'axe (8) de l'arbre, l'angle (β) étant dans une plage allant de 80° à 100° ou de 85° à 95°.

7. Dispositif suivant la revendication 6, dans lequel l'angle (β) est égal à environ 90°.

8. Dispositif suivant l'une des revendications 1 à 7, dans lequel l'axe (12) de pivotement coupe perpendiculairement l'axe (8) de l'arbre.

9. Dispositif suivant l'une des revendications 1 à 8, dans lequel le deuxième capteur (5) de force mesure des forces produites par le balourd du rotor (9) tournant et s'appliquant sur l'arbre (1) de mesure et sur le deuxième palier (3) dans une direction perpendiculaire à l'axe (12) de pivotement.

10. Dispositif suivant l'une des revendications 1 à 9, dans lequel un élément (16) de support supportant un moteur (17) et des moyens (38) de transmission transmettant le couple du moteur (17) à l'arbre (1) de mesure est relié rigidement au premier palier (2).

11. Dispositif suivant la revendication 2, dans lequel les moyens (14) de ressorts conçus sous la forme de ressorts à lame s'étendent suivant un agencement parallèle, perpendiculairement à l'axe (8) de l'arbre.

12. Dispositif suivant la revendication 11, dans lequel les ressorts à lame sont placés des deux côtés par rapport à l'axe (8) de l'arbre.

13. Dispositif suivant l'une des revendications 2, 11, 12, dans lequel les ressorts (14) à lame sont reliés rigidement au cadre (7) fixe dans un plan qui inclut l'axe (8) de l'arbre.

14. Dispositif suivant l'une des revendications 2, 11 à 13, dans lequel les ressorts (14) à lame sont reliés rigidement au milieu de leur étendue au cadre (7) fixe.

15. Dispositif suivant l'une des revendications 1 à 14, dans lequel le premier palier (2) à la forme d'un tube.

16. Dispositif suivant l'une des revendications 1 à 15, dans lequel l'axe (12) de pivotement, autour duquel le deuxième palier (3) est supporté à pivotement, est établi au moyen de deux ressorts (13, 13) de torsion, l'axe (8) de l'arbre s'étendant au milieu entre les deux ressorts (13, 13) de torsion.

17. Utilisation d'un dispositif suivant l'une des revendications 1 à 16 dans une machine de réparation de pneumatique.
